# EUROPÄISCHE PATENTSCHRIFT

(11) **EP 3 850 207 B1**
(45) Veröffentlichungstag und Bekanntmachung des Hinweises auf die Patenterteilung: **24.04.2024**
(21) Anmeldenummer: 19779348.2
(22) Anmeldetag: 10.09.2019
(51) Int. Cl.: F02M 21/02, B63J 2/12, F02M 21/06, F02M 31/18, F28D 7/00, F28D 9/00, B63H 21/38, F02B 43/00

(54) **ANORDNUNG ZUM VERDAMPFEN VON FLÜSSIGGAS ZUR BEREITSTELLUNG VON BRENNGAS FÜR EINEN MOTOR**
ASSEMBLY FOR EVAPORATING LIQUID GAS FOR PROVIDING COMBUSTION GAS FOR A MOTOR
DISPOSITIF DE VAPORISATION DE GAZ LIQUÉFIÉ POUR L'ALIMENTATION EN GAZ D'UN MOTUER

(30) Priorität: 10.09.2018 DE 102018007142; 10.09.2018 DE 202018004185 U
(43) Veröffentlichungstag der Anmeldung: 21.07.2021
(73) Patentinhaber: TGE Marine Gas Engineering GmbH, 53175 Bonn (DE)
(72) Erfinder: DILLMANN, Andreas, 53819 Neunkirchen-Seelscheid (DE); HAMBÜCKER, Andreas, 53177 Bonn (DE); KUKUK, Markus, 40597 Düsseldorf (DE); SEEGERT, Annette, 53797 Lohmar (DE)
(74) Vertreter: Eisenführ Speiser
(86) Internationale Anmeldenummer: PCT/EP2019/074129
(87) Internationale Veröffentlichungsnummer: WO 2020/053222

(56) Entgegenhaltungen:
- WO-A1-2007/074210
- WO-A1-2014/081182
- WO-A1-2015/067841
- WO-A1-2017/186839
- WO-A2-2005/061949
- DE-T5-112015 000 465
- DE-T5-112016 003 562

## Beschreibung

Die Erfindung bezieht sich auf eine Anordnung zum Verdampfen von Flüssiggas zur Bereitstellung von Brenngas für einen Motor, gemäß dem Oberbegriff von Anspruch 1.

Eine solche Anordnung ist aus der DE 10 2014 219 501 A1 bekannt. In der WO 2007/074210 A1 ist eine Anordnung offenbart, die als zweiten Wärmetauscher einen Wärmetauscher aufweist, der in Wärmeaustauschverbindung mit einer Wärmequelle niedrigen Temperaturniveaus, wie Meerwasser, steht, wobei nach dem Verdampfer das verdampfte Flüssiggas, das nunmehr als Brenngas bezeichnet wird, vor Eintritt in den Motor mittels eines Gas-Überhitzers auf die für den Motor erforderliche Endtemperatur erwärmt wird. WO 2015/067841 A1 betrifft ein System zur Ladung und Verteilung von Treibstoff für ein gasbetriebenes Schiff. Aus WO 2014/081182 A1 ist ein mit dreidimensionalen Kanälen versehener Wärmetauscher bekannt.

WO 2005/061949 A2 betrifft ein System sowie ein Verfahren zur Verdampfung eines durch Kühlung verflüssigten, kryogen gespeicherten Kraftstoffs.

Die Aufgabe der vorliegenden Erfindung liegt darin, den Aufwand für die Erwärmung des Brenngases auf die für den Motor erforderliche Temperatur zu senken.

Erfindungsgemäß wird die Aufgabe bei einer gattungsgemäßen Anordnung durch die kennzeichnenden Merkmale des Anspruchs 1 gelöst.

Durch die erfindungsgemäßen Maßnahmen kann auf äußerst wirtschaftliche Weise das Brenngas auf die für den Motor erforderliche Endtemperatur erwärmt werden. Dadurch, dass der Wärmeträger vor seinem Eintritt in den Verdampfer eine Hochtemperatur-Heizeinrichtung durchläuft, die den Wärmeträger mittels Abwärme aus einem an die Hochtemperatur-Heizeinrichtung angeschlossenen Aggregat aufheizt, tritt zum einen der Wärmeträger mit einer relativ hohen Temperatur in den Verdampfer ein, wodurch wiederum das verdampfte Flüssiggas auf eine erhöhte Temperatur erwärmt wird, sodass für die nach dem Verdampfer noch erforderliche Resterwärmung auf die für den Motor erforderliche Endtemperatur weniger Energie benötigt wird. Zum anderen ist durch die Nutzung ohnehin vorhandener Abwärme eine zusätzliche Erzeugung von Wärmeenergie für die Hochtemperatur-Heizeinrichtung nicht erforderlich und wird gleichzeitig die Kühlung der Aggregate vereinfacht, da das Kühlsystem der Aggregate nur noch für die Restkühlung ausgelegt werden muss. Darüber hinaus werden durch Nutzung von bei Aggregaten anfallender Abwärme statt der im Stand der Technik vorgeschlagenen Nutzung der Wärme des Meerwassers die Anforderungen an das zu verwendende Material erheblich gesenkt, denn Meerwasser ist sehr aggressiv. Während im Stand der Technik meer- bzw. seewasserresistente Spezialmaterialien eingesetzt werden müssen, beispielsweise besonders hochwertige Spezialstähle, wie Titanlegierungen, genügen bei der erfindungsgemäßen Lösung normale Edelstähle zur Herstellung der Wärmeübertragungsverbindung zwischen Aggregat und Hochtemperatur-Heizeinrichtung. Auf diese Weise wird durch die Integration ohnehin vorhandener Abwärme nicht nur der Wärmeträger auf eine gegenüber dem Stand der Technik deutlich erhöhte Wärmeträger-Temperatur erwärmt und damit der notwendige Gesamtbedarf an zusätzlicher Energie - wie für den Gas-Überhitzer - zur Erwärmung des Brenngases auf die für den Motor erforderliche Temperatur beträchtlich gesenkt. Es werden auch gleichzeitig der Aufwand für die Kühlung der Aggregate verringert und die Anforderungen an das einzusetzende Material reduziert. Erfindungsgemäß sind der Teil des Kühlmittel-Kreislaufes, der auch Teil des Wärmetauschers ist, und Heizelemente der Hochtemperatur-Heizeinrichtung in einem gemeinsamen Wärmeträgerraum angeordnet und werden dort von dem Wärmeträger umströmt. Mit diesen Maßnahmen wird eine konstruktiv einfache, kostengünstige Ausbildung der Erfindung ermöglicht.

Die Hochtemperatur-Heizeinrichtung kann in Strömungsrichtung des Wärmeträgers nach oder vor dem (ersten) Wärmetauscher angeordnet sein.

In einer günstigen Weiterbildung der Erfindung sind der Wärmetauscher und die Hochtemperatur-Heizeinrichtung unterhalb des Verdampfers angeordnet. Mit diesen Maßnahmen kann ein Naturumlauf des Wärmeträgers erzielt werden, da der erwärmte Wärmeträger von selbst nach oben in den Verdampfer strömt und der abgekühlte Wärmeträger von selbst aus dem Verdampfer nach unten strömt.

Bevorzugt ist die Hochtemperatur-Heizeinrichtung zu ihrer Versorgung mit Wärme an einen Kühlwasser-Kreislauf angeschlossen, an den auch das Aggregat angeschlossen ist. Hierdurch kann auf konstruktiv relativ einfache Weise die Abwärme des Aggregats zur Hochtemperatur-Heizeinrichtung gebracht werden und das Aggregat wieder mit abgekühltem Kühlwasser versorgt werden. Zudem ist Kühlwasser weitaus weniger aggressiv als Meerwasser, sodass hier äußerst kostengünstige Stähle verwendet werden können.

Vorteilhafterweise beträgt die Temperatur der Abwärme mindestens 20° C, bevorzugt mindestens 30° C und besonders bevorzugt mindestens 35° C. Mit diesen Temperaturen kann der Wärmeträger auf eine Temperatur erwärmt werden, mit der er seinerseits im Verdampfer das Brenngas auf eine Temperatur erwärmt, die relativ nahe an der Endtemperatur des Brenngases liegt, die für den Motor erforderlich ist.

In einer weiteren vorteilhaften Ausgestaltung der Erfindung ist die Hochtemperatur-Heizeinrichtung dazu ausgelegt, den Wärmeträger soweit aufzuheizen, dass das Brenngas aus dem Verdampfer mit der für den Motor erforderlichen Endtemperatur austritt. In diesem Fall ist nach dem Verdampfer eine Resterwärmung nicht mehr erforderlich, da das Brenngas bereits die für den Motor erforderliche Endtemperatur aufweist.

Bevorzugt ist an den Kühlmittel-Kreislauf eine Klimaanlage angeschlossen. Mit dieser Maßnahme kann das Kühlmittel für eine Klimaanlage auf kostengünstige Weise heruntergekühlt werden.

Bevorzugt ist das Aggregat eine Verbrennungsmaschine, z. B. eine Dieselmaschine, zum Antrieb eines Generators. Die Temperatur im Kühlwasser-Kreislauf solcher Verbrennungsmaschinen, insbesondere einer Dieselmaschine, kann im Bereich von 20° C bis 95° C liegen, sodass der Hochtemperatur-Heizeinrichtung Abwärme mit ausreichend hohen Temperaturen zugeführt werden kann.

Vorzugsweise ist der Motor ein Schiffsmotor. Insbesondere ist eine erfindungsgemäße Anordnung für Passagierschiffe interessant. Auf diesen besteht ein großer Bedarf an Generatoren zur Stromerzeugung und daher fallen große Mengen an Abwärme an.

Zur Erfindung gehört auch ein Schiff mit einer erfindungsgemäßen Anordnung.

Die Erfindung wird nachfolgend anhand der Zeichnungen beispielshalber noch näher erläutert. Es zeigen:
Figur 1 ein Fließbild einer ersten Ausführungsform einer erfindungsgemäßen Anordnung;
Figur 2 einen Vertikalschnitt durch eine zweite Ausführungsform einer erfindungsgemäßen Anordnung und
Figur 3 eine Seitenansicht einer dritten Ausführungsform einer erfindungsgemäßen Anordnung.

Die in den Figuren dargestellten Ausführungsbeispiele einer erfindungsgemäßen Anordnung 1 weisen eine Brenngas-Zuführungsleitung 2, einen Verdampfer 3, einen Wärmeträger-Kreislauf 4, einen Wärmetauscher 5, einen Kühlmittel-Kreislauf 6, eine Hochtemperatur-Heizeinrichtung 7 sowie eine Wärmeübertragungsverbindung 8 von der Hochtemperatur-Heizeinrichtung 7 zu einem (nicht dargestellten) Aggregat auf.

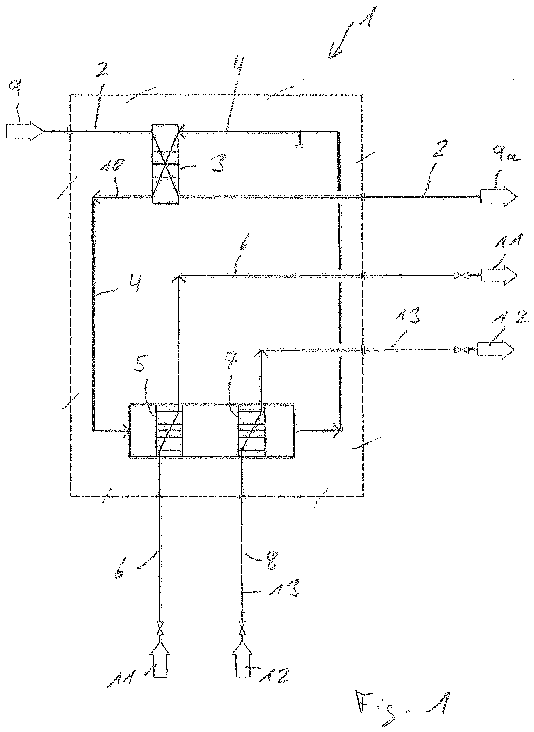

Wie in Figur 1 dargestellt ist, tritt das Flüssiggas 9 in den Verdampfer 3 ein, aus dem es im verdampften Zustand - nunmehr als Brenngas 9a bezeichnet - austritt. Vor seinem Eintritt in einen (nicht dargestellten) Motor wird das Brenngas 9a in einem (ebenfalls nicht dargestellten) Gas-Überhitzer auf die für den Motor notwendige Endtemperatur aufgeheizt.

Der Verdampfer 3 ist an den Wärmeträger-Kreislauf 4 angeschlossen, der in Strömungsrichtung des Wärmeträgers 10 zunächst den Wärmetauscher 5 aufweist, der seinerseits an den Kühlmittel-Kreislauf 6 angeschlossen ist.

An den Kühlmittel-Kreislauf 6 wiederum kann beispielsweise eine Klimaanlage angeschlossen sein oder Einrichtungen, die kühl gehalten werden müssen, wie z. B. Lagerräume für Lebensmittel.

In dem Wärmetauscher 5 gibt der abgekühlte, vom Verdampfer 3 kommende Wärmeträger 10 Kälte an das erwärmte, von der Klimaanlage und/oder einer Kühleinrichtung kommende Kühlmittel 11 ab und wird dadurch in einem ersten Schritt erwärmt. Im Rahmen dieser Anmeldung wird unter dem Abkühlen des Wärmeträgers 10 auch dessen Kondensation und unter dem Erwärmen des Wärmeträgers 10 auch dessen Verdampfen verstanden, auch wenn der Wechsel der Aggregatszustände nur innerhalb eines schmalen Temperaturbereiches von beispielsweise 5° C erfolgt.

In Strömungsrichtung des Wärmeträgers 10 nach diesem Wärmetauscher 5 ist die Hochtemperatur-Heizeinrichtung 7 angeordnet, die ihrerseits an ein (nicht dargestelltes) Aggregat angeschlossen ist, bei dem Abwärme anfällt und das in Wärmeübertragungsverbindung 8 mit der Hochtemperatur-Heizeinrichtung 7 steht. Das Aggregat kann zum Beispiel eine Dieselmaschine sein, die einen Generator antreibt. Das Kühlwasser 12 der Dieselmaschine wird im Kreis 13 über die Hochtemperatur-Heizeinrichtung 7 geleitet, wobei die Temperatur des von der Dieselmaschine kommenden Kühlwassers 12 mindestens 20° C und bevorzugt 30° C und besonders bevorzugt üblicherweise 35° C bis 45° C beträgt.

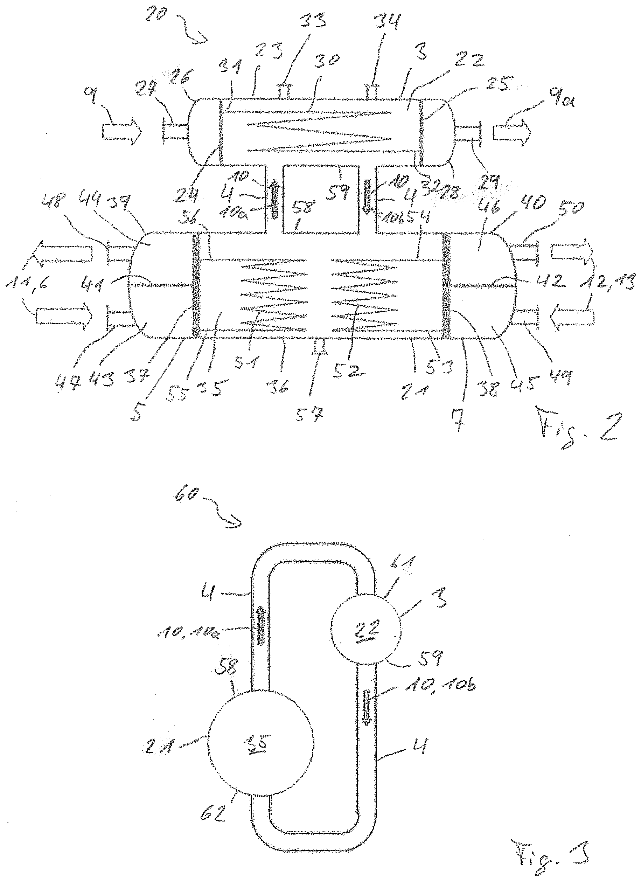

Die Figuren 2 und 3 zeigen schematisch zwei mögliche konstruktive Ausbildungen 20, 60 einer erfindungsgemäßen Anordnung.

Der Verdampfer 3 ist bei beiden konstruktiven Ausbildungen 20, 60 oberhalb eines Wärmetauschapparates 21 angeordnet und steht mit diesem 21 über den Wärmeträger-Kreislauf 4 in Wärmeübertragungsverbindung.

Wie in Figur 2 dargestellt ist, weist der Verdampfer 3 einen Verdampfer-Wärmeträgerraum 22 auf, der horizontal länglich ausgebildet ist, in Umfangsrichtung von einem Verdampfer-Mantel 23 umschlossen ist und an seinen Längsenden von Verdampfer-Trennplatten 24, 25 begrenzt ist, die mit dem Verdampfer-Mantel 23 dicht verschweißt sind.

In Figur 2 auf der linken Seite wird die Verdampfer-Trennplatte 24 von einer Flüssiggas-Eintrittshaube 26 überspannt, die einen Flüssiggas-Eintrittsstutzen 27 aufweist, in den das Flüssiggas 9 eintritt.

Auf der in Figur 2 rechten Seite wird die Verdampfer-Trennplatte 25 von einer Brenngas-Austrittshaube 28 überspannt, die einen Brenngas-Austrittsstutzen 29 aufweist, aus dem das verdampfte Flüssiggas - nunmehr als Brenngas 9a bezeichnet - austritt.

In dem Verdampfer-Wärmeträgerraum 22 ist eine Rohrleitung 30 angeordnet, deren Eintrittsende 31 durch die eintrittsseitige Verdampfer-Trennplatte 24 hindurch in die Flüssiggas-Eintrittshaube 26 mündet. Das Austrittsende 32 dieser Rohrleitung 30 mündet durch die austrittsseitige Verdampfer-Trennplatte 25 hindurch in die Brenngas-Austrittshaube 28.

In dem Verdampfer-Wärmeträgerraum 22 wird die Rohrleitung 30 von dem Wärmeträger 10 umströmt.

Statt einer Rohrleitung 30 (bzw. eines Rohrbündels) können auch andere Wärmetauschelemente eingesetzt werden, z. B. ein Plattenpaket.

Der Verdampfer-Wärmeträgerraum 22 weist zudem auf seiner Oberseite einen Einfüllstutzen 33 für den Wärmeträger 10 und einen Entlüftungsstutzen 34 auf.

Der Wärmetauschapparat 21 weist ebenfalls einen Wärmeträgerraum 35 auf, der in horizontaler Richtung länglich ausgebildet ist, in Umfangsrichtung von einem Mantel 36 umschlossen ist und an seinen beiden Längsenden von jeweils einer Trennplatte 37, 38 begrenzt ist, die mit dem Mantel 36 dicht verschweißt ist.

Die Trennplatten 37, 38 werden jeweils von einer Haube 39, 40 überspannt, deren jeweiliger Innenraum wiederum durch eine Horizontalplatte 41, 42 in zwei Kammern 43, 44, 45, 46 getrennt ist.

Auf der in Figur 2 linken Seite sind dies eine Eintritts- und eine Austrittskammer 43, 44 für das Kühlmittel 11 aus dem Kühlmittel-Kreislauf 6.

Auf der in Figur 2 rechten Seite sind dies eine Eintritts- und eine Austrittskammer 45, 46 für das Kühlwasser 12 aus dem Kühlwasser-Kreislauf 13.

Der die Kühlwasser-Eintrittskammer 45 überdeckende Haubenabschnitt weist einen Kühlwasser-Eintrittsstutzen 49 auf zum Anschluss an die Kühlwasser-Zuführung.

Der die Kühlwasser-Austrittskammer 46 überspannende Haubenabschnitt weist einen Kühlwasser-Austrittsstutzen 50 auf, der an die Kühlwasser-Abführungsleitung anschließbar ist.

In ähnlicher Weise weist auch die die Kühlmittel-Eintrittskammer 43 und -Austrittskammer 44 überspannende Haube 39 einen Kühlmittel-Eintrittsstutzen 47 und einen Kühlmittel-Austrittsstutzen 48 auf, die an die Kühlmittel-Zuführungsleitung bzw. -Abführungsleitung anschließbar sind.

In dem Wärmeträgerraum 35 des Wärmetauschapparates 21 sind sowohl Kühlmittelrohre 51 des Kühlmittel-Kreislaufes 6 als auch Heizrohre 52 der Hochtemperatur-Heizeinrichtung 7 - d. h. Kühlwasserrohre eines Kühlwasser-Kreislaufes 13 - angeordnet und werden dort von dem Wärmeträger 10 umströmt. Der Kühlwasser-Kreislauf 13 kann beispielsweise der einer Dieselmaschine sein und die Abwärme der Dieselmaschine über die Heizrohre 52 dem Wärmeträger 10 zuführen.

Die Heizrohre 52 sind an ein Kühlwasser-Eintrittsrohr 53 und an ein Kühlwasser-Austrittsrohr 54 angeschlossen, die die kühlwasserseitige Trennplatte 38 durchlaufen und in die Kühlwasser-Eintrittskammer 45 bzw. Kühlwasser-Austrittskammer 46 münden.

Ebenso sind die Kühlmittelrohre 51 an ein Kühlmittel-Eintrittsrohr 55 und an ein Kühlmittel-Austrittsrohr 56 angeschlossen, die die kühlmittelseitige Trennplatte 37 durchlaufen und in die Kühlmittel-Eintrittskammer 43 bzw. Kühlmittel-Austrittskammer 44 münden.

Wie für die Rohrleitung 30 im Verdampfer 3 können auch für die Heizrohre 52 einschließlich Kühlwasser-Eintrittsrohr 53 und -Austrittsrohr 54 (bzw. für ein entsprechendes Rohrbündel) oder für die Kühlmittelrohre 51 einschließlich Kühlmittel-Eintrittsrohr 55 und -Austrittsrohr 56 (bzw. für ein entsprechendes Rohrbündel) andere Wärmetauschelemente eingesetzt werden, z. B. jeweils ein Plattenpaket.

Auf seiner Unterseite weist der Wärmetauschapparat 21 einen Wärmeträger-Entleerungsstutzen 57 auf.

Der Verdampfer-Wärmeträgerraum 22 ist mit dem für Kühlmittelrohre 51 und Heizrohre 52 gemeinsamen Wärmeträgerraum 35 des Wärmetauschapparates 21 in dem Wärmeträger-Kreislauf 4 verbunden. Dabei wird dem Verdampfer-Wärmeträgerraum 22 erwärmter Wärmeträger 10a zugeführt, mittels dem das Flüssiggas 9 verdampft wird, und nach dem Verdampfen aus dem Verdampfer-Wärmeträgerraum 22 abgekühlter Wärmeträger 10b in den gemeinsamen Wärmeträgerraum 35 des Wärmetauschapparates 21 zurückgeführt. Der abgekühlte Wärmeträger kann auch kondensiert sein.

Dabei sind in der in Figur 2 dargestellten Ausführungsform die Oberseite 58 des Wärmeträgerraums 35 des Wärmetauschapparates 21 und die Unterseite 59 des Verdampfer-Wärmeträgerraums 22 in dem Wärmeträger-Kreislauf 4 miteinander verbunden, sodass erwärmter Wärmeträger 10a von der Oberseite 58 des Wärmetauschapparates 21 der Unterseite 59 des Verdampfers 3 und abgekühlter Wärmeträger 10b von der Unterseite 59 des Verdampfers 3 der Oberseite 58 des Wärmetauschapparates 21 zugeführt wird.

Bei dem in Figur 2 dargestellten Ausführungsbeispiel tritt der abgekühlte Wärmeträger 10b in den Wärmetauschapparat 21 auf dessen Seite ein, die an den Kühlwasser-Kreislauf 13 angeschlossen ist, und der erwärmte Wärmeträger 10a auf der Seite des Wärmetauschapparates 21 aus, die an den Kühlmittel-Kreislauf 6 angeschlossen ist. Somit ist bei diesem Ausführungsbeispiel die Hochtemperatur-Heizeinrichtung 7 in Strömungsrichtung des Wärmeträgers 10 vor dem Wärmetauscher 5 angeordnet.

In der in Figur 3 dargestellten Ausführungsform ist die Oberseite 58 des Wärmeträgerraums 35 des Wärmetauschapparates 21 mit der Oberseite 61 des Verdampfer-Wärmeträgerraums 22 sowie die Unterseite 59 des Verdampfer-Wärmeträgerraums 22 mit der Unterseite 62 des Wärmeträgerraums 35 des Wärmetauschapparates 21 verbunden, sodass erwärmter Wärmeträger 10a von der Oberseite 58 des Wärmetauschapparates 21 der Oberseite 61 des Verdampfers 3 und abgekühlter Wärmeträger 10b von der Unterseite 59 des Verdampfers 3 der Unterseite 62 des Wärmetauschapparates 21 zugeführt wird.
im übrigen ist der in Figur 3 angedeutete Verdampfer 3 und Wärmetauschapparat 21 identisch mit dem in Figur 2 dargestellten Verdampfer 3 und Wärmetauschapparat 21.

Die in den Figuren jeweils dargestellte Reihenfolge von Hochtemperatur-Heizeinrichtung 7 und Wärmetauscher 5 in Strömungsrichtung des Wärmeträgers 10 kann dort auch jeweils umgekehrt sein.

Bei den in den Figuren 2 und 3 dargestellten Ausführungsformen sind der Wärmetauscher 5 und die Hochtemperatur-Heizeinrichtung 7 bzw. der gemeinsame Wärmeträgerraum 35 unterhalb des Verdampfers 3 angeordnet. Der erwärmte Wärmeträger 10a steigt von selbst in den Verdampfer 3 auf und der abgekühlte Wärmeträger 10b fällt von selbst aus dem Verdampfer 3 nach unten, so dass der Wärmeträger 10 im Naturumlauf umläuft.

## Patentansprüche

1. Anordnung zum Verdampfen von Flüssiggas zur Bereitstellung von Brenngas für einen Motor, mit
einer Brenngas-Zuführungsleitung (2), die einen Flüssiggastank mit dem Motor verbindet,
einem Verdampfer (3), der in der Brenngas-Zuführungsleitung (2) angeordnet ist und in dem das Flüssiggas (9) verdampft wird, und mit
einem Wärmeträger-Kreislauf (4), der an den Verdampfer (3) angeschlossen ist und einen Wärmetauscher (5) aufweist, der seinerseits an einen Kühlmittel-Kreislauf (6) angeschlossen ist, und eine weitere Wärmeübertragungseinrichtung (7) aufweist, die weitere Wärme in den Wärmeträger-Kreislauf (4) bringt,
wobei die weitere Wärmeübertragungseinrichtung eine Hochtemperatur-Heizeinrichtung (7) ist, die zu ihrer Versorgung mit Wärme mit einem Aggregat in Wärmeübertragungsverbindung steht, in dessen Betriebszustand Abwärme anfällt
**dadurch gekennzeichnet,**
**dass** der Teil (51, 55, 56) des Kühlmittel-Kreislaufes (6), der auch Teil des Wärmetauschers (5) ist, und Heizelemente (52) der Hochtemperatur-Heizeinrichtung (7) in einem gemeinsamen Wärmeträgerraum (35) angeordnet sind und dort von dem Wärmeträger (10) umströmt werden.

2. Anordnung nach Anspruch 1, **dadurch gekennzeichnet, dass** die Hochtemperatur-Heizeinrichtung (7) in Strömungsrichtung des Wärmeträgers (10) nach dem Wärmetauscher (5) angeordnet ist.

3. Anordnung nach Anspruch 1, **dadurch gekennzeichnet, dass** die Hochtemperatur-Heizeinrichtung (7) in Strömungsrichtung des Wärmeträgers (10) vor dem Wärmetauscher (5) angeordnet ist.

4. Anordnung nach einem der vorstehenden Ansprüche, **dadurch gekennzeichnet, dass** der Wärmetauscher (5) und die Hochtemperatur-Heizeinrichtung (7) unterhalb des Verdampfers (3) angeordnet sind.

5. Anordnung nach einem der vorstehenden Ansprüche, **dadurch gekennzeichnet, dass** die Hochtemperatur-Heizeinrichtung (7) zu ihrer Versorgung mit Wärme an einen Kühlwasser-Kreislauf (13) angeschlossen ist, an den auch das Aggregat angeschlossen ist.

6. Anordnung nach einem der vorstehenden Ansprüche, **dadurch gekennzeichnet, dass** die Temperatur der Abwärme mindestens 20° C, bevorzugt mindestens 30° C und besonders bevorzugt mindestens 35° C beträgt.

7. Anordnung nach einem der vorstehenden Ansprüche, **dadurch gekennzeichnet, dass** die Hochtemperatur-Heizeinrichtung (7) dazu ausgelegt ist, den Wärmeträger (10) soweit aufzuheizen, dass das Brenngas (9a) aus dem Verdampfer (3) mit der für den Motor erforderlichen Endtemperatur austritt.

8. Anordnung nach einem der vorstehenden Ansprüche, **dadurch gekennzeichnet, dass** an den Kühlmittel-Kreislauf (6) eine Klimaanlage angeschlossen ist.

9. Anordnung nach einem der vorstehenden Ansprüche, **dadurch gekennzeichnet, dass** das Aggregat eine Verbrennungsmaschine zum Antrieb eines Generators ist.

10. Anordnung nach einem der vorstehenden Ansprüche, **dadurch gekennzeichnet, dass** der Motor ein Schiffsmotor ist.

11. Schiff mit einer Anordnung nach einem der Ansprüche 1 bis 10.

## Claims

1. An assembly for evaporating liquid gas in order to provide combustion gas for an engine, with
a combustion gas supply line (2) which connects a liquid gas tank to the engine,
an evaporator (3) which is disposed in the combustion gas supply line (2) and in which the liquid gas (9) is evaporated, and with
a heat transfer medium circuit (4) which is connected to the evaporator (3) and has a heat exchanger (5) which in turn is connected to a coolant circuit (6), and a further heat transfer device (7) which introduces more heat into the heat transfer medium circuit (4),
wherein, in order to supply it with heat, the further heat transfer device is a high temperature heating device (7) which is in heat transfer communication with a unit which generates waste heat when in its operational state,
**characterized in that**
the part (51, 55, 56) of the coolant circuit (6) which is also a part of the heat exchanger (5) and heating elements (52) of the high temperature heating device (7) are disposed in a common heat transfer medium chamber (35) and the heat transfer medium (10) flows around them therein.

2. The assembly as claimed in claim 1, **characterized in that** the high temperature heating device (7) is disposed downstream of the heat exchanger (5) in the direction of flow of the heat transfer medium (10).

3. The assembly as claimed in claim 1, **characterized in that** the high temperature heating device (7) is disposed upstream of the heat exchanger (5) in the direction of flow of the heat transfer medium (10).

4. The assembly as claimed in one of the preceding claims, **characterized in that** the heat exchanger (5) and the high temperature heating device (7) are disposed below the evaporator (3).

5. The assembly as claimed in one of the preceding claims, **characterized in that** in order to supply it with heat, the high temperature heating device (7) is connected to a cooling water circuit (13) to which the unit is also connected.

6. The assembly as claimed in one of the preceding claims, **characterized in that** the temperature of the waste heat is at least 20°C, preferably at least 30°C and particularly preferably at least 35°C.

7. The assembly as claimed in one of the preceding claims, **characterized in that** the high temperature heating device (7) is configured to heat the heat transfer medium (10) to an extent such that the combustion gas (9a) exits the evaporator (3) at the final temperature which is required for the engine.

8. The assembly as claimed in one of the preceding claims, **characterized in that** an air conditioning unit is connected to the coolant circuit (6).

9. The assembly as claimed in one of the preceding claims, **characterized in that** the unit is an internal combustion engine, for example a diesel engine, for driving a generator.

10. The assembly as claimed in one of the preceding claims, **characterized in that** the engine is a ship's engine.

11. A ship with an assembly as claimed in one of claims 1 to 10.

## Revendications

1. Ensemble d'évaporation de gaz liquéfié pour fournir du gaz combustible pour un moteur, avec
une conduite d'amenée de gaz combustible (2), qui relie un réservoir de gaz liquéfié au moteur,
un évaporateur (3), qui est disposé dans la conduite d'amenée de gaz combustible (2) et dans lequel le gaz liquéfié (9) est évaporé, et avec
un circuit d'agent caloporteur (4), qui est raccordé à l'évaporateur (3) et présente un échangeur de chaleur (5), qui est raccordé quant à lui à un circuit de liquide de refroidissement (6), et présente un autre système de transfert de chaleur (7), qui apporte de la chaleur supplémentaire dans le circuit d'agent caloporteur (4),
dans lequel le système de transfert de chaleur supplémentaire est un système de chauffage à haute température (7), qui, aux fins de son alimentation en chaleur, est en liaison de transfert de chaleur avec un groupe dans l'état de fonctionnement duquel se forme de la chaleur perdue,
**caractérisé en ce**
**que** la partie (51, 55, 56) du circuit de liquide de refroidissement (6), qui fait partie aussi de l'échangeur de chaleur (5), et des éléments de chauffage (52) du système de chauffage à haute température (7) sont disposés dans un espace d'agent caloporteur (35) commun, et l'agent caloporteur (10) s'écoule autour de ceux-ci.

2. Ensemble selon la revendication 1, **caractérisé en ce que** le système de chauffage à haute température (7) est disposé en aval de l'échangeur de chaleur (5) dans la direction d'écoulement de l'agent caloporteur (10) .

3. Ensemble selon la revendication 1, **caractérisé en ce que** le système de chauffage à haute température (7) est disposé en amont de l'échangeur de chaleur (5) dans la direction d'écoulement de l'agent caloporteur (10) .

4. Ensemble selon l'une quelconque des revendications précédentes, **caractérisé en ce que** l'échangeur de chaleur (5) et le système de chauffage à haute température (7) sont disposés sous l'évaporateur (3) .

5. Ensemble selon l'une quelconque des revendications précédentes, **caractérisé en ce que** le système de chauffage à haute température (7) est raccordé, aux fins de son alimentation en chaleur, à un circuit d'eau de refroidissement (13), auquel le groupe est raccordé également.

6. Ensemble selon l'une quelconque des revendications précédentes, **caractérisé en ce que** la température de la chaleur perdue est d'au moins 20 °C, de manière préférée d'au moins 30 °C et de manière particulièrement préférée d'au moins 35 °C.

7. Ensemble selon l'une quelconque des revendications précédentes, **caractérisé en ce que** le système de chauffage à haute température (7) est conçu pour réchauffer l'agent caloporteur (10) jusqu'à ce que le gaz combustible (9a) provenant de l'évaporateur (3) sorte avec la température finale requise pour le moteur.

8. Ensemble selon l'une quelconque des revendications précédentes, **caractérisé en ce qu'**une installation de climatisation est raccordée au circuit de liquide de refroidissement (6).

9. Ensemble selon l'une quelconque des revendications précédentes, **caractérisé en ce que** le groupe est une machine à combustion destinée à entraîner un générateur.

10. Ensemble selon l'une quelconque des revendications précédentes, **caractérisé en ce que** le moteur est un moteur de bateau.

11. Bateau avec un ensemble selon l'une quelconque des revendications 1 à 10.
